# EUROPEAN PATENT APPLICATION

(11) **EP 3 525 453 A1**
(43) Date of publication of application: **14.08.2019**
(21) Application number: 17858583.2
(22) Date of filing: 23.06.2017
(51) Int. Cl.: H04N 5/45, H04N 21/431, H04N 21/426, H04N 5/262, H04N 5/44

(54) **DISPLAY DEVICE**

(30) Priority: 05.10.2016 KR 20160128265
(71) Applicant: LG Electronics Inc., Seoul 07336 (KR)
(72) Inventor: LEE, Hyeseung, Seoul 06772 (KR); HWANG, Jeonghwan, Seoul 06772 (KR); AHN, Sangjin, Seoul 06772 (KR)
(74) Representative: Schornack, Oliver
(86) International application number: PCT/KR2017/006620
(87) International publication number: WO 2018/066788

(57) **Abstract**

A display device according to an embodiment of the present invention comprises: a display unit configured to display a first partial image of an omnidirectional image on a main screen and display a second partial image on a sub-screen, the second partial image having the same viewpoint as the first partial image and including the first partial image; a user input interface unit configured to receive a viewpoint movement command for the sub-screen; and a controller configured to display a third partial image corresponding to a viewpoint moved from a viewpoint of the second partial image on the sub-screen, based on the received viewpoint movement command, and to perform control so that a viewpoint of the first partial image displayed on the main screen is maintained when the viewpoint is moved to the third partial image.

## Description

### CROSS-REFERENCE TO RELATED APPLICATION

This application claims the priority benefit of Application No. PCT/KR2017/006620, filed on June 23, 2017, all of which are hereby incorporated by reference as if fully set forth herein.

### TECHNICAL FIELD

The present invention relates to a display device for providing a plurality of partial images included in an omnidirectional image on one screen by using a sub-screen such as picture-in-picture (PIP).

### BACKGROUND ART

In recent years, technologies capable of omnidirectionally capturing an image by using an omnidirectional camera and providing the captured image to a user have been introduced. A representative example is a capturing device called a 360-degree camera, a mobile terminal or a display device that displays an image captured by the 360-degree camera, or the like.

Severe distortion occurs when an entire region of an omnidirectionally captured image is displayed on one screen. Therefore, it is general that an image of a partial region corresponding to a specific viewpoint in the omnidirectionally captured image is displayed, and when there is a user operation, the viewpoint is moved and an image of another region is displayed.

As described above, in the case of displaying an image of a partial region in the omnidirectional captured image, a user cannot view an image of another region together. Additionally, when the user moves the viewpoint so as to view an image of another region, it may be difficult to smoothly view the image while the viewpoint is moved to a desired region.

In the case of viewing an image omnidirectionally captured through a large-screen display device such as a TV, an effective viewing environment can be provided due to a large screen, as compared with a mobile terminal such as a smartphone. Additionally, since the TV has a large screen, methods for more effectively providing a user with an omnidirectionally captured image by using the large screen can be implemented.

Meanwhile, the display device may provide not only a main screen for outputting an image on the entire region of the display but also a sub-screen (for example, picture-in-picture (PIP)) for outputting an image by using a partial region of the display. Such a sub-screen can be displayed when a zoom function is performed or when multiple channels are provided. The sub-screen may display the same image as the main screen, or may display different images from the main screen. There is a need for a scheme for more effectively providing an omnidirectional image to a user by using such a sub-screen.

### DISCLOSURE OF THE INVENTION

### TECHNICAL PROBLEM

Embodiments of the present invention provide a display device capable of providing a more effective viewing environment when a user views an omnidirectional image by using a main screen and a sub-screen displayed on a display unit.

### TECHNICAL SOLUTION

A display device according to an embodiment of the present invention includes: a display unit configured to display a first partial image of an omnidirectional image on a main screen and display a second partial image on a sub-screen, the second partial image having the same viewpoint as the first partial image and including the first partial image; a user input interface unit configured to receive a viewpoint movement command for the sub-screen; and a controller configured to display a third partial image corresponding to a viewpoint moved from a viewpoint of the second partial image on the sub-screen, based on the received viewpoint movement command, and to perform control so that a viewpoint of the first partial image displayed on the main screen is maintained when the viewpoint is moved to the third partial image.

The controller may be configured to: receive a selection request for selecting the third partial image displayed on the sub-screen according to the viewpoint movement command, and change, in response to the received selection request, the first partial image displayed on the main screen to a fourth partial image having the same viewpoint as the third partial image and included in the third partial image, and display the fourth partial image.

According to an embodiment, the display device may further include a memory configured to store an original image of the omnidirectional image, wherein the controller may be configured to generate a distorted image for displaying an entire region of the omnidirectional image on the display unit, the first partial image may be acquired from the original image stored in the memory, and the second partial image may be acquired from the distorted image.

The controller may be configured to: display the second partial image on the sub-screen in response to a zoom function execution request for the omnidirectional image; and display, on the second partial image, a region guide indicating a region corresponding to the first partial image of the second partial image.

The controller may be configured to: receive a zoom-in request or a zoom-out request for the fourth partial image displayed on the main screen; display an enlarged image or a reduced image of the fourth partial image on the main screen in response to the received request; and adjust a size of the region guide in correspondence to a region of the enlarged image or the reduced image.

According to an embodiment, the second partial image may correspond to the omnidirectional image, and the controller may be configured to: receive a request for moving the region guide and move and display a position of the region guide based on the received request; and display a partial image corresponding to the removed position of the region guide on the main screen.

The controller may be configured to: receive a zoom command for a partial region of the first partial image displayed on the main screen; acquire an enlarged or reduced image of an image of the partial region in response to the received zoom command; and display the sub-screen including the acquired image at a position corresponding to the partial region.

The controller may be configured to: receive a movement request for moving a display position of the sub-screen; move and display a position of the sub-screen based on the received movement request; and display an enlarged or reduced image of a region corresponding to the moved position on the sub-screen.

The controller may be configured to: acquire an enlarged or reduced image for an image of a region corresponding to the partial region in an image of an opposite side of the first partial image of the omnidirectional image in response to the received zoom command; and display the sub-screen including the acquired image at a position corresponding to the partial region.

The position of the partial region may correspond to a display position of a pointer corresponding to a movement of a remote control device.

A display device according to an embodiment of the present invention includes: a memory configured to store an original image of an omnidirectional image; a display unit configured to display a first partial image of the omnidirectional image on a main screen and display a second partial image on a sub-screen, the second partial image having the same viewpoint as the first partial image and including the first partial image; and a controller configured to generate a distorted image for displaying an entire region of the omnidirectional image on one screen through the display unit, wherein the first partial image is acquired from the original image, and the second partial image is acquired from the distorted image.

### ADVANTAGEOUS EFFECTS

According to various embodiments of the present invention, a display device can display a partial image of an omnidirectional image on a main screen and a sub-screen, and move and display only a partial image of the sub-screen when the viewpoint of the omnidirectional image is moved. Accordingly, a user can smoothly view the omnidirectional image through the partial image displayed on the main screen even when the viewpoint for the omnidirectional image is moved.

In addition, since only the partial image of the sub-screen can be moved and displayed, the display device can provide partial images of a plurality of viewpoints of the omnidirectional image to the user on one screen.

### BRIEF DESCRIPTION OF THE DRAWINGS

Fig. 1 is a block diagram illustrating a configuration of a display device according to an embodiment of the present invention.
Fig. 2 is a block diagram illustrating a remote control device according to an embodiment of the present invention.
Fig. 3 is a view illustrating an actual configuration of a remote control device according to an embodiment of the present invention.
Fig. 4 is a view of utilizing a remote control device according to an embodiment of the present invention.
Fig. 5 is a flowchart of an omnidirectional image displaying method of a display device, according to an embodiment of the present invention.
Figs. 6A and 6B are views illustrating an example in which partial images included in an omnidirectional image are displayed on a main screen and a sub-screen of a display device.
Figs. 7A to 7D are exemplary views illustrating the omnidirectional image displaying method illustrated in Fig. 5.
Fig. 8 is a flowchart of an omnidirectional image displaying method of a display device, according to another embodiment of the present invention.
Figs. 9A to 9C are exemplary views illustrating the omnidirectional image displaying method illustrated in Fig. 8.
Figs. 10A to 10C are exemplary views illustrating the omnidirectional image displaying method illustrated in Fig. 8.
Figs. 11A and 11B are exemplary views illustrating the omnidirectional image displaying method illustrated in Fig. 8.
Figs. 12A and 12B are exemplary views illustrating the omnidirectional image displaying method illustrated in Fig. 8.
Fig. 13 is a flowchart of an omnidirectional image displaying method of a display device, according to further another embodiment of the present invention.
Figs. 14A to 14D are exemplary views illustrating the omnidirectional image displaying method illustrated in Fig. 13.
Figs. 15A to 15D are exemplary views illustrating the omnidirectional image displaying method illustrated in Fig. 13.
Figs. 16A and 16B are exemplary views illustrating the omnidirectional image displaying method illustrated in Fig. 13.

### BEST MODE

Hereinafter, embodiments relating to the present invention will be described in detail with reference to the accompanying drawings. The suffixes "module" and "unit" for components used in the description below are assigned or mixed in consideration of easiness in writing the specification and do not have distinctive meanings or roles by themselves.

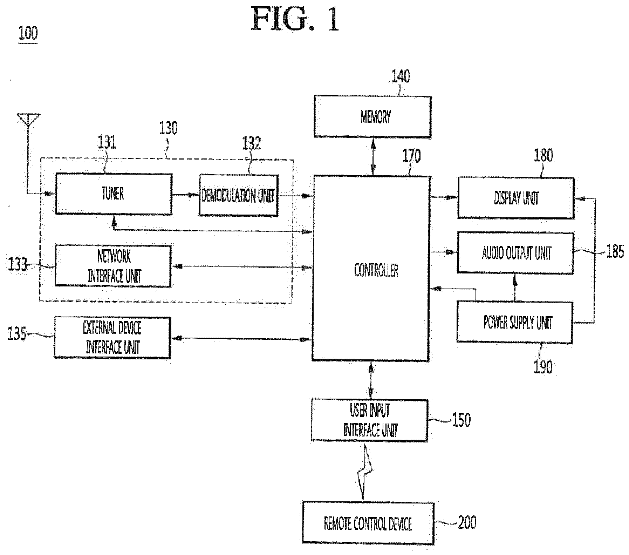

Fig. 1 is a block diagram illustrating a configuration of a display device according to an embodiment of the present invention.

Referring to Fig. 1, the display device 100 may be implemented with a TV, a monitor, a projector, or a device including the same.

A display device 100 can include a broadcast reception unit 130, an external device interface unit 135, a memory 140, a user input interface unit 150, a controller 170, a display unit 180, an audio output unit 185, and a power supply unit 190.

The broadcast reception unit 130 can include a tuner 131, a demodulation unit 132, and a network interface unit 133.

The tuner 131 can select a specific broadcast channel according to a channel selection command. The tuner 131 can receive broadcast signals for the selected specific broadcast channel.

The demodulation unit 132 can divide the received broadcast signals into video signals, audio signals, and broadcast program related data signals and restore the divided video signals, audio signals, and data signals to an output available form.

The network interface unit 133 can provide an interface for connecting the display device 100 to a wired/wireless network including internet network. The network interface unit 133 can transmit or receive data to or from another user or another electronic device through an accessed network or another network linked to the accessed network.

Additionally, some content data stored in the display device 100 can be transmitted to a user or an electronic device, which is selected from other users or other electronic devices pre-registered in the display device 100.

The network interface unit 133 can access a predetermined webpage through an accessed network or another network linked to the accessed network. That is, it can transmit or receive data to or from a corresponding server by accessing a predetermined webpage through network.

Then, the network interface unit 133 can receive contents or data provided from a content provider or a network operator. That is, the network interface unit 133 can receive contents such as movies, advertisements, games, VODs, and broadcast signals, which are provided from a content provider or a network provider, through network and information relating thereto.

Additionally, the network interface unit 133 can receive firmware update information and update files provided from a network operator and transmit data to an internet or content provider or a network operator.

The network interface unit 133 can select and receive a desired application among applications open to the air, through network.

The external device interface unit 135 can receive an application or an application list in an adjacent external device and deliver it to the controller 170 or the memory 140.

The external device interface unit 135 can provide a connection path between the display device 100 and an external device. The external device interface unit 135 can receive at least one of image and audio output from an external device that is wirelessly or wiredly connected to the display device 100 and deliver it to the controller 170.

An external device connectable to the external device interface unit 135 can be one of a set-top box, a Blu-ray player, a DVD player, a game console, a sound bar, a smartphone, a PC, a USB Memory, and a home theater system but this is just exemplary.

The memory 140 can store signal-processed image, voice, or data signals stored by a program in order for each signal processing and control in the controller 170.

Additionally, the memory 140 can perform a function for temporarily store image, voice, or data signals output from the external device interface unit 135 or the network interface unit 133 and can store information on a predetermined image through a channel memory function.

The memory 140 can store an application or an application list inputted from the external device interface unit 135 or the network interface unit 133.

The display device 100 can play content files (for example, video files, still image files, music files, document files, application files, and so on) stored in the memory 140 and provide them to a user.

The user input interface unit 150 can deliver signals inputted from a user to the controller 170 or deliver signals from the controller 170 to a user. For example, the user input interface unit 150 can receive or process control signals such as power on/off, channel selection, and screen setting from the remote control device 200 or transmit control signals from the controller 170 to the remote control device 200 according to various communication methods such as Bluetooth, Ultra Wideband (UWB), ZigBee, Radio Frequency (RF), and IR.

Additionally, the user input interface unit 150 can deliver, to the controller 170, control signals inputted from local keys (not shown) such as a power key, a channel key, a volume key, and a setting key.

Image signals that are image-processed in the controller 170 can be inputted to the display unit 180 and displayed as an image corresponding to corresponding image signals. Additionally, image signals that are image-processed in the controller 170 can be inputted to an external output device through the external device interface unit 135.

Voice signals processed in the controller 170 can be output to the audio output unit 185. Additionally, voice signals processed in the controller 170 can be inputted to an external output device through the external device interface unit 135.

Besides that, the controller 170 can control overall operations in the display device 100.

Additionally, the controller 170 can control the display device 100 by a user command or internal program inputted through the user input interface unit 150 and download a desired application or application list into the display device 100 in access to network.

The controller 170 can output channel information selected by a user together with processed image or voice signals through the display unit 180 or the audio output unit 185.

Additionally, according to an external device image playback command received through the user input interface unit 150, the controller 170 can output image signals or voice signals of an external device such as a camera or a camcorder, which are inputted through the external device interface unit 135, through the display unit 180 or the audio output unit 185.

Moreover, the controller 170 can control the display unit 180 to display images and control broadcast images inputted through the tuner 131, external input images inputted through the external device interface unit 135, images inputted through the network interface unit, or images stored in the memory 140 to be displayed on the display unit 180. In this case, an image displayed on the display unit 180 can be a still image or video and also can be a 2D image or a 3D image.

Additionally, the controller 170 can play content stored in the display device 100, received broadcast content, and external input content inputted from the outside, and the content can be in various formats such as broadcast images, external input images, audio files, still images, accessed web screens, and document files.

The display unit 180 can convert image signals, data signals, or OSD signals, which are processed in the controller 170, or images signals or data signals, which are received in the external device interface unit 135, into R, G, and B signals to generate driving signals.

Furthermore, the display device 100 shown in Fig. 1 is just one embodiment of the present invention and thus, some of the components shown can be integrated, added, or omitted according to the specification of the actually implemented display device 100.

That is, if necessary, two or more components can be integrated into one component or one component can be divided into two or more components and configured. Additionally, a function performed by each block is to describe an embodiment of the present invention and its specific operation or device does not limit the scope of the present invention.

According to another embodiment of the present invention, unlike Fig. 1, the display device 100 can receive images through the network interface unit 133 or the external device interface unit 135 and play them without including the tuner 131 and the demodulation unit 132.

For example, the display device 100 can be divided into an image processing device such as a set-top box for receiving broadcast signals or contents according to various network services and a content playback device for playing contents inputted from the image processing device.

In this case, an operating method of a display device according to an embodiment of the present invention described below can be performed by one of the display device described with reference to Fig. 1, an image processing device such as the separated set-top box, and a content playback device including the display unit 180 and the audio output unit 185.

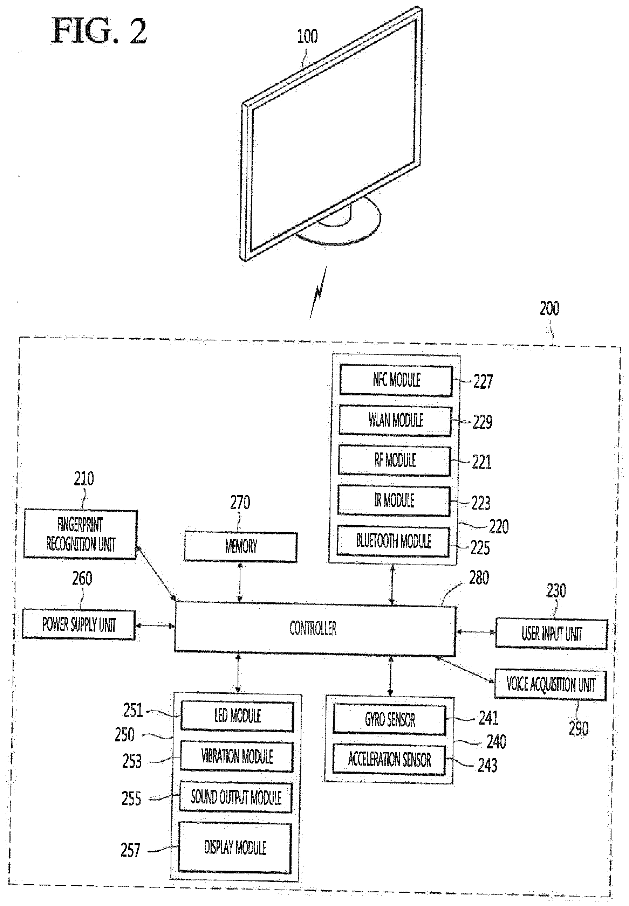

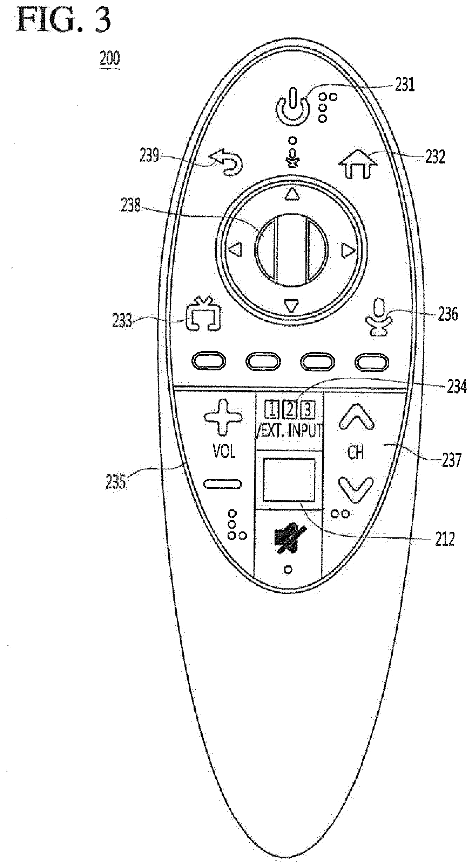

Then, referring to Figs. 2 and 3, a remote control device is described according to an embodiment of the present invention.

Fig. 2 is a block diagram illustrating a remote control device according to an embodiment of the present invention and Fig. 3 is a view illustrating an actual configuration of a remote control device according to an embodiment of the present invention.

First, referring to Fig. 2, a remote control device 200 can include a fingerprint recognition unit 210, a wireless communication unit 220, a user input unit 230, a sensor unit 240, an output unit 250, a power supply unit 260, a memory 270, a controller 280, and a voice acquisition unit 290.

Referring to Fig. 2, the wireless communication unit 225 transmits/receives signals to/from an arbitrary any one of display devices according to the above-mentioned embodiments of the present invention.

The remote control device 200 can include an RF module 221 for transmitting/receiving signals to/from the display device 100 according to the RF communication standards and an IR module 223 for transmitting/receiving signals to/from the display device 100 according to the IR communication standards. Additionally, the remote control device 200 can include a Bluetooth module 225 for transmitting/receiving signals to/from the display device 100 according to the Bluetooth communication standards. Additionally, the remote control device 200 can include an NFC module 227 for transmitting/receiving signals to/from the display device 100 according to the Near Field Communication (NFC) communication standards and a WLAN module 229 for transmitting/receiving signals to/from the display device 100 according to the Wireless LAN (WLAN) communication standards.

Additionally, the remote control device 200 can transmit signals containing information on a movement of the remote control device 200 to the display device 100 through the wireless communication unit 220.

Moreover, the remote control device 200 can receive signals transmitted from the display device 100 through the RF module 221 and if necessary, can transmit a command on power on/off, channel change, and volume change to the display device 100 through the IR module 223.

The user input unit 230 can be configured with a keypad button, a touch pad, or a touch screen. A user can manipulate the user input unit 230 to input a command relating to the display device 100 to the remote control device 200. If the user input unit 230 includes a hard key button, a user can input a command relating to the display device 100 to the remote control device 200 through the push operation of the hard key button. This will be described with reference to Fig. 3.

Referring to Fig. 3, the remote control device 200 can include a plurality of buttons. The plurality of buttons can include a fingerprint recognition button 212, a power button 231, a home button 232, a live button 233, an external input button 234, a voice adjustment button 235, a voice recognition button 236, a channel change button 237, a check button 238, and a back button 239.

The fingerprint recognition button 212 can be a button for recognizing a user's fingerprint. According to an embodiment of the present invention, the fingerprint recognition button 212 can perform a push operation and receive a push operation and a fingerprint recognition operation. The power button 231 can be button for turning on/off the power of the display device 100. The power button 231 can be button for moving to the home screen of the display device 100. The live button 233 can be a button for displaying live broadcast programs. The external input button 234 can be button for receiving an external input connected to the display device 100. The voice adjustment button 235 can be button for adjusting the size of a volume output from the display device 100. The voice recognition button 236 can be a button for receiving user's voice and recognizing the received voice. The channel change button 237 can be a button for receiving broadcast signals of a specific broadcast channel. The check button 238 can be a button for selecting a specific function and the back button 239 can be a button for returning to a previous screen.

Again, Fig. 2 is described.

If the user input unit 230 includes a touch screen, a user can touch a soft key of the touch screen to input a command relating to the display device 100 to the remote control device 200. Additionally, the user input unit 230 can include various kinds of input means manipulated by a user, for example, a scroll key and a jog key, and this embodiment does not limit the scope of the present invention.

The sensor unit 240 can include a gyro sensor 241 or an acceleration sensor 243 and the gyro sensor 241 can sense information on a movement of the remote control device 200.

For example, the gyro sensor 241 can sense information on an operation of the remote control device 200 on the basis of x, y, and z axes and the acceleration sensor 243 can sense information on a movement speed of the remote control device 200. Moreover, the remote control device 200 can further include a distance measurement sensor and sense a distance with respect to the display unit 180 of the display device 100.

The output unit 250 can output image or voice signals corresponding to a manipulation of the user input unit 235 or corresponding to signals transmitted from the display device 100. A user can recognize whether the user input unit 235 is manipulated or the display device 100 is controlled through the output unit 250.

For example, the output unit 250 can include an LED module 251 for flashing, a vibration module 253 for generating vibration, a sound output module 255 for outputting sound, or a display module 257 for outputting an image, if the user input unit 235 is manipulated or signals are transmitted/received to/from the display device 100 through the wireless communication unit 225.

Additionally, the power supply unit 260 supplies power to the remote control device 200 and if the remote control device 200 does not move for a predetermined time, stops the power supply, so that power waste can be reduced. The power supply unit 260 can resume the power supply if a predetermined key provided at the remote control device 200 is manipulated.

The memory 270 can store various kinds of programs and application data necessary for a control or operation of the remote control device 200. If the remote control device 200 transmits/receives signals wirelessly through the display device 100 and the RF module 221, the remote control device 200 and the display device 100 transmits/receives signals through a predetermined frequency band.

The controller 280 of the remote control device 200 can store, in the memory 270, information on a frequency band for transmitting/receiving signals to/from the display device 100 paired with the remote control device 200 and refer to it.

The controller 280 controls general matters relating to a control of the remote control device 200. The controller 280 can transmit a signal corresponding to a predetermined key manipulation of the user input unit 235 or a signal corresponding to a movement of the remote control device 200 sensed by the sensor unit 240 to the display device 100 through the wireless communication unit 225.

Additionally, the voice acquisition unit 290 of the remote control device 200 can obtain voice.

The voice acquisition unit 290 can include at least one microphone 291 and obtain voice through the microphone 291.

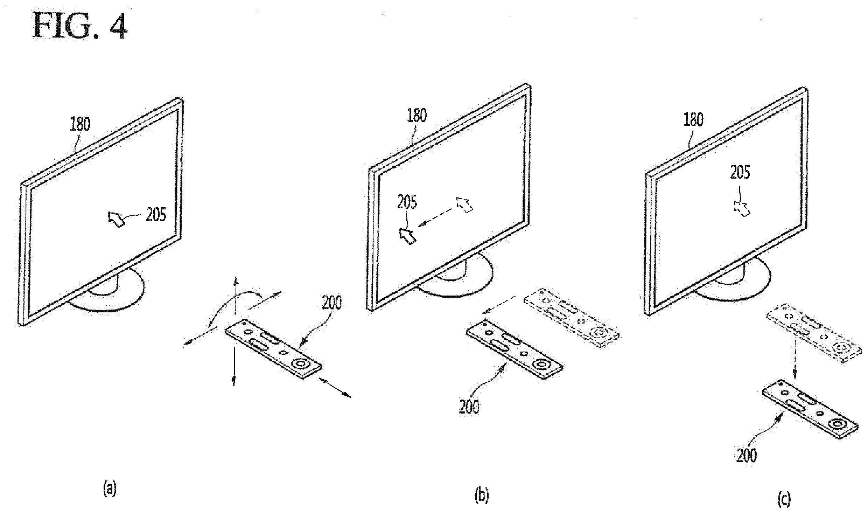

Then, Fig. 4 is described.

Fig. 4 is a view of utilizing a remote control device according to an embodiment of the present invention.

Fig. 4 illustrates that a pointer 205 corresponding to the remote control device 200 is displayed on the display unit 180.

A user can move or rotate the remote control device 200 vertically or horizontally. The pointer 205 displayed on the display unit 180 of the display device 100 corresponds to a movement of the remote control device 200. Since the corresponding pointer 205 is moved and displayed according to a movement on a 3D space as show in the drawing, the remote control device 200 can be referred to as a spatial remote controller.

Fig. 4 illustrates that if a user moves the remote control device 200, the pointer 205 displayed on the display unit 180 of the display device 100 is moved to the left in correspondence thereto.

Information on a movement of the remote control device 200 detected through a sensor of the remote control device 200 is transmitted to the display device 100. The display device 100 can calculate the coordinates of the pointer 205 from the information on the movement of the remote control device 200. The display device 100 can display the pointer 205 to match the calculated coordinates.

Fig. 4 illustrates that while a specific button in the remote control device 200 is pressed, a user moves the remote control device 200 away from the display unit 180. Thus, a selection area in the display unit 180 corresponding to the pointer 205 can be zoomed in and displayed largely.

On the other hand, if a user moves the remote control device 200 close to the display unit 180, a selection area in the display unit 180 corresponding to the pointer 205 can be zoomed out and displayed reduced.

On the other hand, if the remote control device 200 is away from the display unit 180, a selection area can be zoomed out and if the remote control device 200 is close to the display unit 180, a selection area can be zoomed in.

Additionally, if a specific button in the remote control device 200 is pressed, the recognition of a vertical or horizontal movement can be excluded. That is, if the remote control device 200 is moved away from or close to the display unit 180, the up, down, left, or right movement cannot be recognized and only the back and forth movement can be recognized. While a specific button in the remote control device 200 is not pressed, only the pointer 205 is moved according to the up, down, left or right movement of the remote control device 200.

Moreover, the moving speed or moving direction of the pointer 205 can correspond to the moving speed or moving direction of the remote control device 200.

Furthermore, a pointer in this specification means an object displayed on the display unit 180 in correspondence to an operation of the remote control device 200. Accordingly, besides an arrow form displayed as the pointer 205 in the drawing, various forms of objects are possible. For example, the above concept includes a point, a cursor, a prompt, and a thick outline. Then, the pointer 205 can be displayed in correspondence to one point of a horizontal axis and a vertical axis on the display unit 180 and also can be displayed in correspondence to a plurality of points such as a line and a surface.

Hereinafter, an omnidirectional image displaying method of a display device, according to an embodiment of the present invention, will be described.

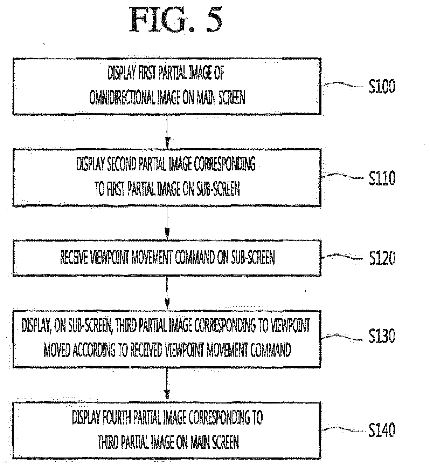

Fig. 5 is a flowchart of an omnidirectional image displaying method of a display device, according to an embodiment of the present invention.

In the present specification, the omnidirectional image is defined as an image captured by using an omnidirectional photographing camera (for example, a 360-degree camera), in which all spherical regions around the camera are photographed.

Referring to Fig. 5, a display device 100 may display a first partial image of an omnidirectional image through a main screen of a display unit 180 (S100). The main screen may refer to a screen displayed in the entire region of the display unit 180. Meanwhile, a sub-screen may refer to a screen displayed in a partial region of the display unit 180. For example, the sub-screen may be implemented by a picture-in-picture (PIP), but is not limited thereto.

The first partial image may refer to an image of a partial region corresponding to a specific viewpoint in the omnidirectional image. According to an embodiment, the first partial image may refer to an image of the entire region of the omnidirectional image. Since the omnidirectional image is an image in which all spherical regions are photographed, when the first partial image is an image of the entire region of the omnidirectional image, distortion may occur in the first partial image displayed on the display unit 180 generally having a rectangular shape. On the other hand, when the first partial image is an image of a partial region of the omnidirectional image, distortion may not occur in the first partial image displayed on the display unit 180.

The display device 100 may display the second partial image corresponding to the first partial image on the sub-screen (SI10).

According to an embodiment, the controller 170 of the display device 100 may display the sub-screen in a circular shape so as to indicate that the image being currently provided is the omnidirectional image. That is, since the distorted second partial image is displayed on the circular sub-screen, is displayed, it can be more effectively shown that the currently displayed image is the omnidirectional image.

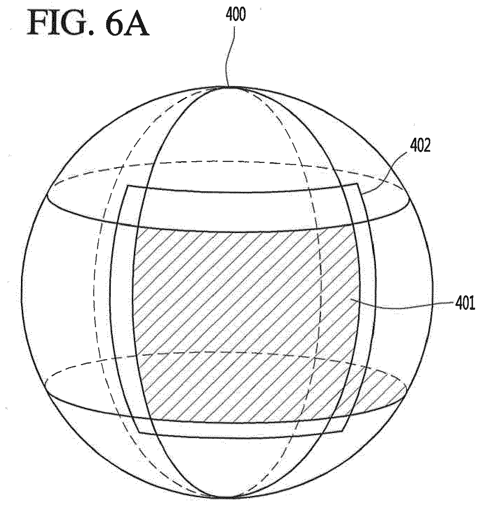

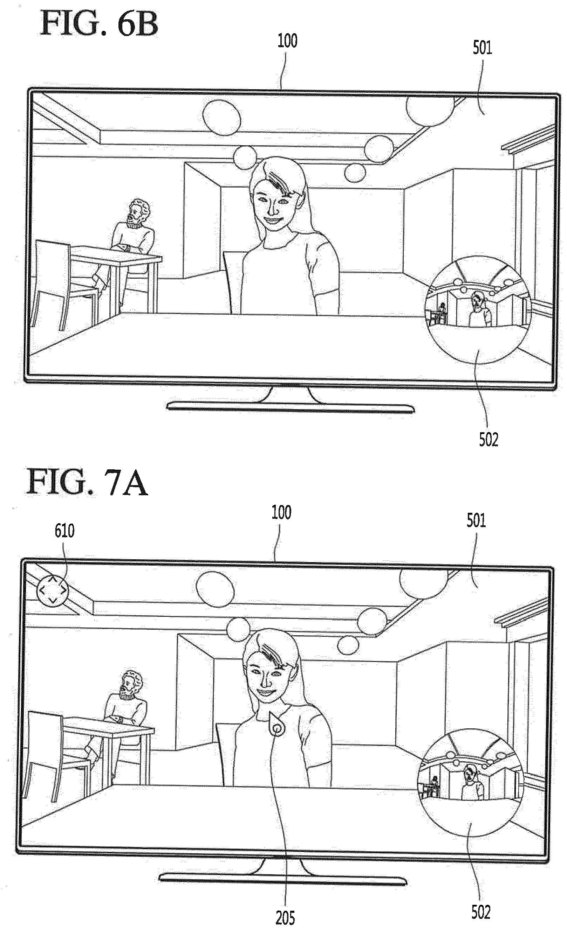

Steps S100 and S110 will be described with reference to Figs. 6A and 6B.

Figs. 6A and 6B are views illustrating an example in which partial images included in an omnidirectional image are displayed on the main screen and the sub-screen of a display device.

Referring to Figs. 6A and 6B, an omnidirectional photographing camera can photograph an entire spherical region 400 and generate an omni-directional image based on the photographing result. The controller 170 may display a first partial image 501 including a partial region 401 corresponding to a specific viewpoint in the entire region 400 of the omnidirectional image on the main screen of the display unit 180.

In addition, the controller 170 may display the second partial image 502 corresponding to the first partial image 501 on the sub-screen of the display unit 180. The second partial image 502 may correspond to the same viewpoint as that of the first partial image 501 and may include the first partial image 501. The sub-screen may be implemented in a circular shape, and the second partial image 502 may be distorted. Meanwhile, the first partial image 501 displayed on the main screen may not be distorted.

Regarding the distortion of the partial image, the original image of the omnidirectional image stored in the memory 140 of the display device 100 corresponds to an image without distortion. Therefore, the controller 170 may extract the first partial image 501 (that is, the image without distortion) corresponding to the partial region 401 from the original image of the omnidirectional image stored in the memory 140, and may display the extracted first partial image 501 on the main screen.

Meanwhile, in the case where the controller 170 displays the entire region 400 of the omnidirectional image on the display unit 180, as the entire region 400 is displayed on the flat display unit 180, the image displayed on the display unit 180 may be distorted. Accordingly, the controller 170 may generate a distorted image for the omnidirectional image. That is, the distorted image may be an image for displaying the entire region of the omnidirectional image on one screen of the display unit 180. As the second partial image 502 is extracted from the distorted image and displayed, the second partial image 502 may be distorted.

That is, the user can intuitively grasp that the image displayed on the display unit 180 is the omni-directional image through the sub-screen on which the distorted second partial image 502 is displayed.

Fig. 5 is described again.

In order to move the viewpoint of the second partial image, the display device 100 may receive a viewpoint movement command for the sub-screen (S120).

For example, the controller 170 may receive the viewpoint movement command for the sub-screen from the remote control device 200 through the user input interface unit 150. The viewpoint movement command may be generated in response to an input of a direction button included in the remote control device 200 or a movement of the remote control device 200.

The display device 100 may display a third partial image corresponding to the viewpoint moved according to the received viewpoint movement command through the sub-screen (S130).

The controller 170 may move the viewpoint of the second partial image based on the received viewpoint movement command. As the viewpoint is moved, the partial image displayed on the sub-screen may also be moved. According to an embodiment, the controller 170 may use the effect of rotation of the circular sub-screen like a sphere to more effectively display the moving of the partial image included in the omnidirectional image.

At this time, even if the image of the sub-screen is changed from the second partial image to the third partial image according to the viewpoint movement command, the first partial image displayed on the main screen may not be changed. Therefore, the user can search another partial image while viewing the first partial image displayed on the main screen.

The display device 100 may display a fourth partial image corresponding to the third partial image on the main screen (S140).

In operation S130, the controller 170 may change the partial image displayed on the sub-screen to the third partial image, display the third partial image, and receive a request for selecting the third partial image through the user input interface unit 150. In response to the received selection request, the controller 170 may change the first partial image displayed on the main screen to the fourth partial image corresponding to the third partial image, and display the fourth partial image.

That is, according to the embodiment illustrated in operations S130 and S140, the user can search another partial image while viewing the first partial image of the forward direction image on the main screen and simultaneously moving the viewpoint of the partial image displayed on the sub-screen. Therefore, the user can smoothly view the partial image through the main screen even while moving the viewpoint of the omnidirectional image.

A specific example of the omnidirectional image displaying method illustrated in Fig. 5 will be described with reference to Figs. 7A to 7D.

Figs. 7A to 7D are exemplary views illustrating the omnidirectional image displaying method illustrated in Fig. 5.

Referring to Fig. 7A, the controller 170 may display the first partial image 501 of the omnidirectional image on the main screen of the display unit 180 and display the second partial image 501 corresponding to the first partial image 501 on the sub-screen of the display unit 180.

According to an embodiment, the controller 170 may display a viewpoint move button 610 for moving the viewpoint of the partial image displayed on the main screen. When the viewpoint move button 610 is selected by the pointer 205 of the remote control device 200, the viewpoint of the partial image displayed on the main screen may be moved up, down, left, or right corresponding to the selected viewpoint move button 610.

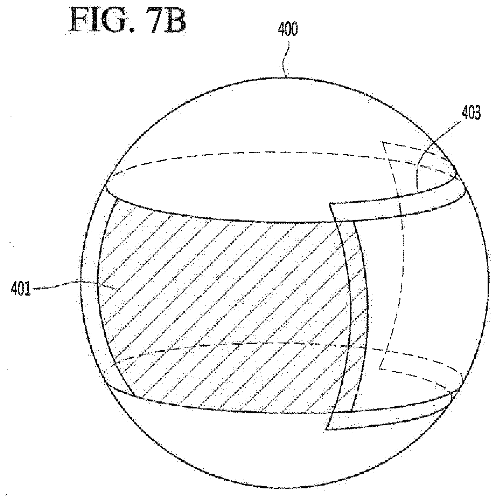

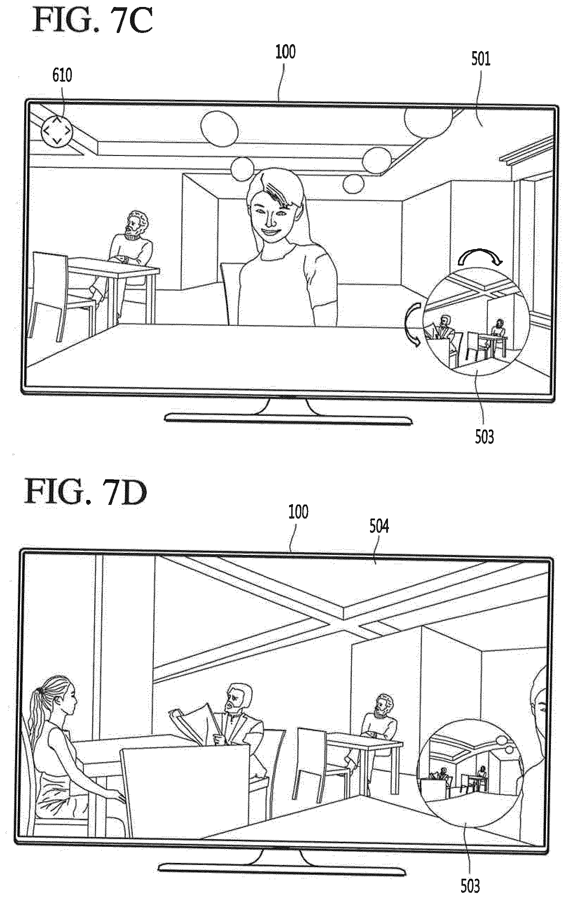

Referring to Figs. 7B and 7C, the controller 170 may receive the viewpoint movement command for the second partial image displayed on the sub-screen.

The controller 170 may receive the viewpoint movement command from the remote control device 200. As illustrated in Fig. 5, the viewpoint movement command may be generated in response to the input of the direction button included in the remote control device 200 or the movement of the remote control device 200.

The controller 170 may move the viewpoint of the second partial image displayed on the sub-screen up, down, left, or right based on the received viewpoint movement command. For example, when the viewpoint movement command is a command for moving the viewpoint to the left side, the controller 170 may move the viewpoint of the first partial image (the viewpoint of the second partial image is also the same) of the entire region 400 of the omnidirectional image to the left side. The controller 170 may display the third partial image 503 corresponding to the region 403 centered on the moved viewpoint through the sub-screen of the display unit 180. Like the second partial image 502, distortion may occur in the third partial image 503 and the third partial image 503. The user can search the third partial image 503 corresponding to another region 403 while continuously viewing the first partial image 501, based on the displayed third partial image 503.

Referring to Fig. 7D, the controller 170 may receive a selection input for the third partial image 503. The selection input may also be received from the remote control device 200.

The controller 170 may change the first partial image 501 displayed on the main screen to the fourth partial image 504 corresponding to the third partial image 503 in response to the received selection input, and display the fourth partial image 504. The fourth partial image 504 may have the same viewpoint as that of the third partial image 503. In addition, the fourth partial image 504 may represent the same region as the third partial image 503, or may represent a region included in the third partial image 503. The fourth partial image 504 may be displayed in a form without distortion, like the first partial image 501.

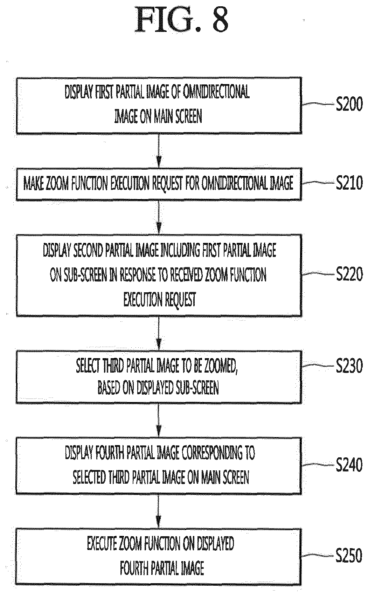

Fig. 8 is a flowchart of an omnidirectional image displaying method of a display device, according to another embodiment of the present invention.

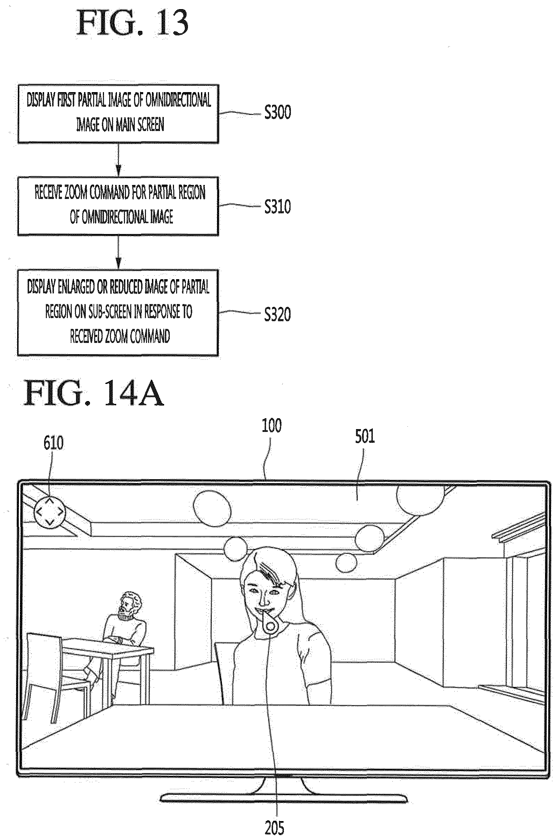

The display device 100 may support a zoom function. The zoom function may include a first zoom function for displaying an enlarged or reduced image on the entire region of the main screen of the display unit 180 and a second zoom function for displaying an enlarged or reduced image on the partial region of the main screen. The zoom function described with reference to Fig. 8 may correspond to the first zoom function. Meanwhile, the zoom function described later in Fig. 13 may correspond to the second zoom function.

Referring to Fig. 8, the display device 100 may display the first partial image of the omnidirectional image on the main screen (S200). Since operation S200 is substantially the same as operation S100 of Fig. 5, a description thereof will be omitted.

The display device 100 may receive a zoom function execution request for the omnidirectional image (S210). In response to the received zoom function execution request, the display device 100 may display the second partial image including the first partial image on the sub-screen (S220).

Similar to that described above with reference to Fig. 5, the second partial image may be an image including the first partial image, and distortion may exist in the second partial image. The sub-screen displayed at this time may be displayed in a circular shape as described above with reference to Fig. 5, or may be displayed in a rectangular shape. When the sub-screen is displayed in a rectangular shape, a distorted image including the entire region of the omnidirectional image may be displayed on the sub-screen.

In addition, a region guide indicating a region of the first partial image displayed on the current main screen may be further displayed on the second partial image displayed on the sub-screen. The region guide may be resized in response to a zoom-in or zoom-out request for the omnidirectional image. For example, the size of the region guide may be reduced at the time of receiving the zoom-in request, and the size of the region guide may be increased at the time of receiving the zoom-out request.

The display device 100 may select the third partial image to be zoomed, based on the displayed sub-screen (S230), and may display the fourth partial image included in the selected third partial image on the main screen (S240).

Similar to operations S120 and S130 in Fig. 5, the controller 170 may display the partial image corresponding to the moved viewpoint on the sub-screen based on the viewpoint movement command for the sub-screen.

The controller 170 may move the viewpoint of the second partial image based on the viewpoint movement command. As the viewpoint is moved, the partial image displayed on the sub-screen may be changed. As described above with reference to Fig. 5, the controller 170 may more effectively display the change of the partial image included in the omnidirectional image by using the effect of rotation of the sub-screen.

When the partial image of the sub-screen is changed, the first partial image displayed on the main screen may be changed corresponding to the partial image of the sub-screen. According to an embodiment, the first partial image may not be changed.

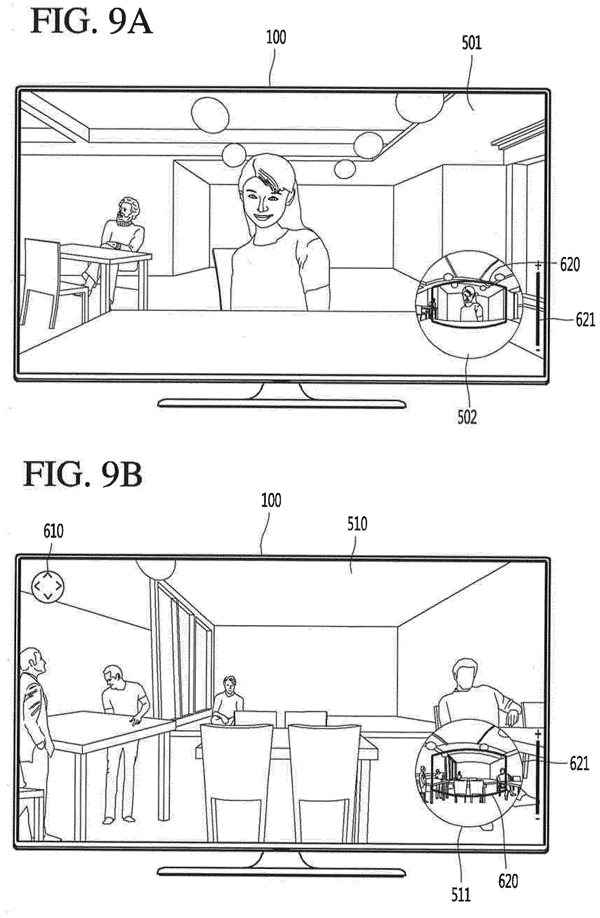

Various embodiments related to operations S230 and S240 will be described later with reference to Figs. 9A to 12B.

The display device 100 may perform the zoom function on the fourth partial image displayed on the main screen, and may change and display the fourth partial image based on the result of performing the zoom function (S250).

When the zoom-in request is received from the remote control device 200 or the like, the controller 170 may enlarge and display the fourth partial image, and when the zoom-out request is received, the controller 170 may reduce and display the fourth partial image.

When the fourth partial image is enlarged, an image of part of an edge region of the previously displayed fourth partial image may not be displayed on the main screen. Meanwhile, when the fourth partial image is reduced, an image of a partial region continuous with a region of the previously displayed fourth partial image and an edge region of the fourth partial image may be further displayed on the main screen.

Various embodiments of the omnidirectional image displaying method illustrated in Fig. 8 will be described with reference to Figs. 9A to 12B.

Figs. 9A to 9C are exemplary views illustrating the omnidirectional image displaying method illustrated in Fig. 8.

Referring to FIG. 9A, the controller 170 may display the first partial image 501 of the omnidirectional image on the display unit 180.

The controller 170 may receive the zoom function execution request for the omni-directional image through the remote control device 200 or the like. The controller 170 may display the second partial image 502 on the sub-screen in response to the received zoom function execution request. As described above, the sub-screen may be displayed in a PIP form.

A region corresponding to the second partial image 502 may include a region corresponding to the first partial image 501. In addition, as described above with reference to Figs. 6A and 6B, distortion may exist in the second partial image 502.

The controller 170 may display the region guide 620 indicating the region of the first partial image 501 displayed through the current main screen on the second partial image 502 included in the sub-screen. Based on the displayed region guide 620, the user can grasp the position and size of the first partial image 501 displayed on the main screen in the second partial image 502.

In addition, the controller 170 may further display an enlargement/reduction bar 621 indicating the degree of enlargement or reduction of the first partial image 501 displayed on the main screen. The user can grasp the degree of enlargement or reduction of the first partial image 501 based on the enlargement/reduction bar 621. According to an embodiment, the controller 170 may receive the zoom-in request or the zoom-out request for the first partial image 501 through the enlargement/reduction bar 621, and may perform the enlargement or reduction operation on the first partial image 501 based on the received request.

Referring to Figs. 9A and 9B, the controller 170 may receive the viewpoint movement command for the second partial image 502 displayed on the sub-screen. Based on the received viewpoint movement command, the controller 170 may move the viewpoint of the partial image displayed on the sub-screen up, down, left, or right.

For example, when the user intends to display the partial image of the opposite viewpoint (or the 180-degree moved viewpoint) from the viewpoint of the second partial image 502 on the sub-screen, and the user can input the direction button of the remote control device 200 a plurality of times, or can input the direction button of the remote control device 200 continuously for a predetermined time. Alternatively, the remote control device 200 may be moved for a predetermined time in a specific direction. Therefore, the controller 170 may display the third partial image 511 corresponding to the image of the opposite side of the second partial image 502 on the sub-screen.

In addition, in the case of the embodiment illustrated in Figs. 9A to 9C, when the partial image displayed on the sub-screen is changed, the partial image displayed on the main screen may also be automatically changed. That is, the controller 170 may automatically change the first partial image 501 displayed on the main screen to the fourth partial image 510 included in the third partial image 511.

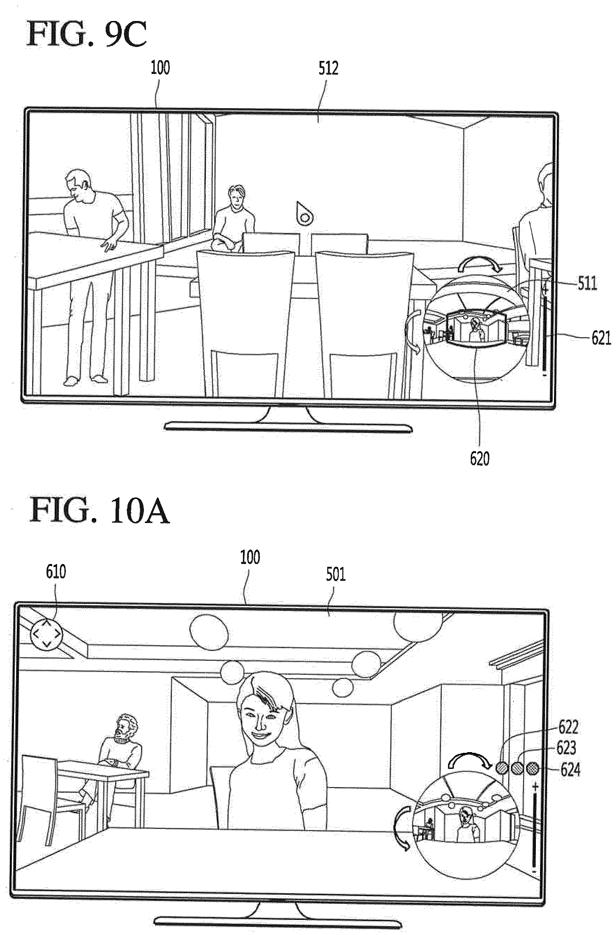

Referring to Fig. 9C, the controller 170 may receive the zoom-in request for the fourth partial image 510. For example, the controller 170 may receive the zoom-in request from the remote control device 200 according to the input of the zoom-in button included in the remote control device 200. Alternatively, the controller 170 may receive the zoom-in request through the enlargement/reduction bar 621.

The controller 170 may display the enlarged fourth partial image 512 on the main screen in response to the received zoom-in request. The enlarged fourth partial image 512 may include part of the fourth partial image 510 illustrated in Fig. 9B. In addition, the controller 170 may adjust the size of the region guide 620 so as to correspond to the region of the enlarged fourth partial image 512. When the partial image is enlarged by the zoom-in request, the size of the region guide 620 displayed on the sub-screen may be reduced.

Figs. 10A to 10C are exemplary views illustrating the omnidirectional image displaying method illustrated in Fig. 8.

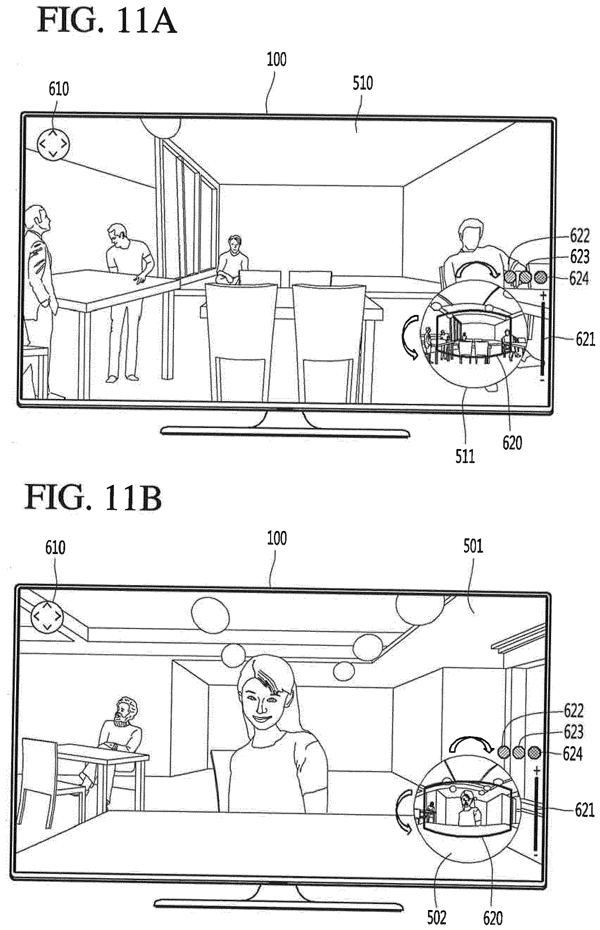

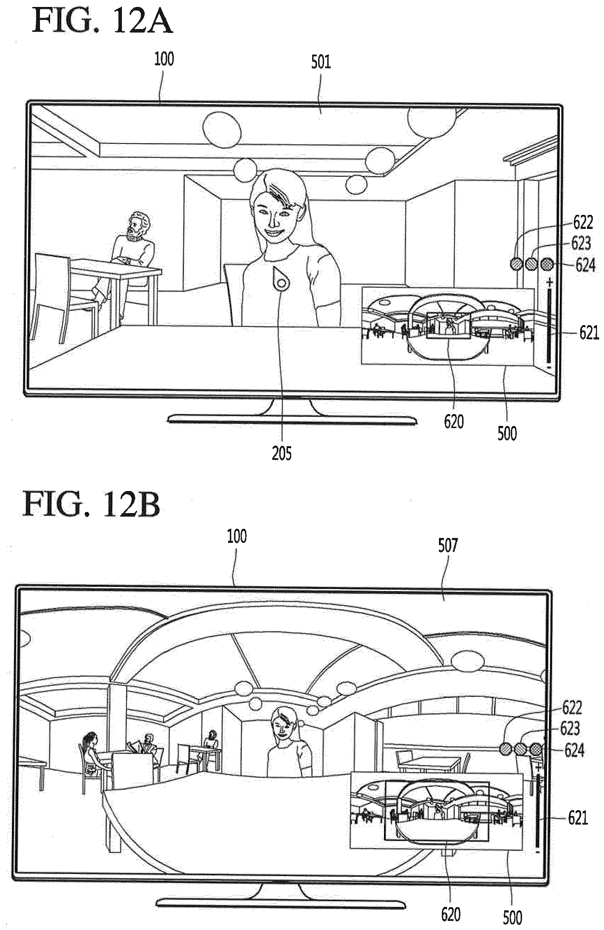

Regarding the embodiments illustrated in Figs. 10A to 12B, the controller 170 may display the sub-screen in response to the zoom function execution request and display the function buttons 622 to 624 for providing the modes related to the viewpoint move of the sub-screen. For example, the embodiment illustrated in Figs. 10A to 10C may correspond to the case where the first function button 622 is selected, and the embodiment illustrated in Figs. 11A and 11B may correspond to the case where the second function button 623 is selected. In addition, the embodiment illustrated in Figs. 12A and 12B may correspond to the case where the third function button 624 is selected.

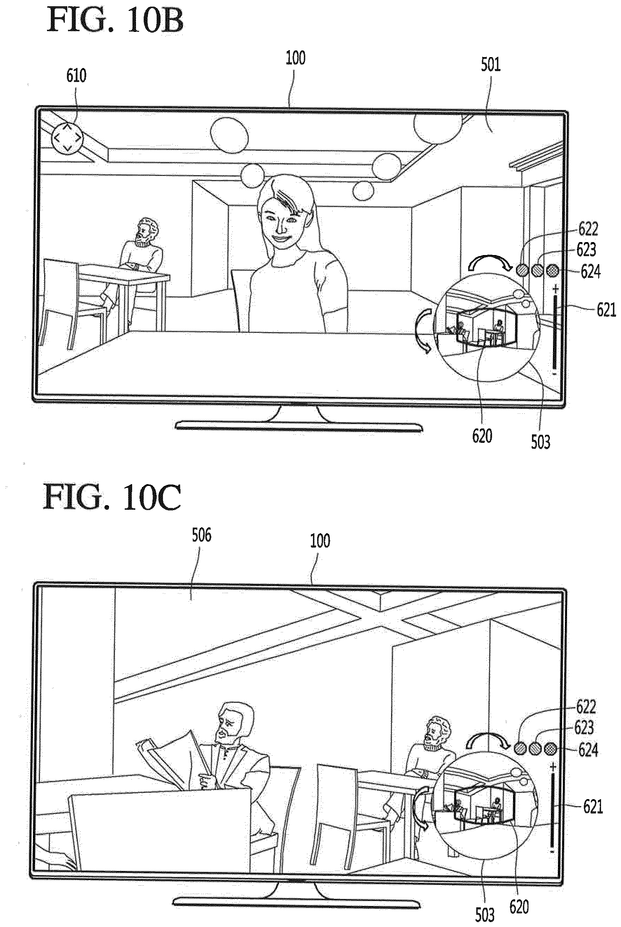

Referring to Figs. 10A and 10B, when the first function button 622 is selected, the controller 170 may not change the viewpoint of the first partial image 501 displayed on the main screen when the viewpoint of the second partial image 502 displayed on the sub-screen is moved. That is, even if the second partial image 502 displayed on the sub-screen is changed to the third partial image 503 according to the viewpoint movement command, the first partial image 501 displayed on the main screen may not be changed.

Referring to Figs. 10B and 10C, the controller 170 may receive the input of selecting the third partial image 503 to be displayed on the sub-screen, change the first partial image 501 displayed on the main screen to the fourth partial image included in the third partial image 503 in response to the received input, and display the fourth partial image. After that, the controller 170 may display the enlarged fourth partial image 506 in response to the zoom-in request for the fourth partial image. As the enlarged fourth partial image 506 is displayed, the size of the region guide 620 displayed on the sub-screen may be reduced.

According to an embodiment, the controller 170 may first receive the zoom-in request before receiving the input of selecting the third partial image 503 to be displayed on the sub-screen. In this case, the controller 170 may adjust the size of the region guide 620 based on the received zoom-in request, and may immediately display the enlarged fourth partial image 506 when the input of selecting the third partial image 503 is received.

That is, in the case of the embodiment illustrated in Figs. 10A to 10C, the partial image displayed on the main screen may be maintained until the partial image to be displayed on the sub-screen is selected or the zoom-in request is received.

Figs. 11A and 11B are exemplary views illustrating the omnidirectional image displaying method illustrated in Fig. 8.

Referring to Figs. 11A and 11B, when the second function button 623 is selected, the controller 170 may change the second partial image 502 displayed on the sub-screen to the third partial image 511 corresponding to the opposite region of the second partial image 502 and display the third partial image 511. That is, the controller 170 may move the viewpoint of the partial image displayed on the current sub-screen to the viewpoint of the image of the opposite side at a time through the second function button 623.

In addition, the controller 170 may automatically change the first partial image 501 displayed on the main screen to the fourth partial image 510 included in the third partial image 511. According to an embodiment, when both the first function button 622 and the second function button 623 are selected, the controller 170 may not automatically change the first partial image 501 displayed on the main screen to the fourth partial image 510. When the input of selecting the third partial image 511 displayed on the sub-screen, the controller 170 may change the first partial image 501 to the fourth partial image 510.

The controller 170 may enlarge or reduce the fourth partial image 510 based on the zoom-in request or the zoom-out request for the fourth partial image 510.

That is, according to the embodiment illustrated in Figs. 11A and 11B, it is possible to solve user inconvenience that has to continuously input the remote control device 200 a plurality of number of times or for a predetermined time so as to change the image displayed on the main screen and the sub-screen to the image of the opposite side and display the image of the opposite side.

Figs. 12A and 12B are exemplary views illustrating the omnidirectional image displaying method illustrated in Fig. 8.

Referring to Figs. 12A and 12B, when the third function button 624 is selected, the controller 170 may display the omnidirectional image 500 corresponding to the entire region on the sub-screen. At this time, the sub-screen may be displayed in a planar form.

The controller 170 may receive the request for moving the region guide 620 displayed on the sub-screen, and may move the position of the region guide 620 based on the received request. The first partial image 501 displayed on the main screen may be changed corresponding to the position of the region guide 620.

The controller 170 may receive the zoom-out request for the first partial image 501. The controller 170 may display the reduced first partial image 507 on the main screen in response to the received zoom-out request. Additionally, the controller 170 may adjust the size of the region guide 620 in correspondence to the reduced first partial image 507. For example, when the reduced first partial image 507 is displayed in response to the zoom-out request, the size of the region guide 620 will increase.

Fig. 13 is a flowchart of an omnidirectional image displaying method of a display device, according to further another embodiment of the present invention.

Referring to Fig. 13, the display device 100 may display the first partial image of the omnidirectional image on the main screen (S300). Since operation S300 is substantially the same as operation S100 of Fig. 5, a description thereof will be omitted.

The display device 100 may receive the zoom command for the partial region of the omnidirectional image (S310).

For example, the controller 170 may receive the zoom command for the partial region of the first partial image displayed on the main screen. The partial region may correspond to the position of the pointer 205 and may have a predetermined size.

The zoom command may be the zoom-in command for enlarging the image included in the partial region, or the zoom-out command for reducing the image included in the partial region.

The display device 100 may display the enlarged or reduced image of the partial region on the sub-screen in response to the received zoom command (S320).

For example, the enlarged or reduced image displayed on the sub-screen may be the enlarged or reduced image corresponding to the partial region of the partial image displayed on the main screen. According to an embodiment, the enlarged or reduced image displayed on the sub-screen may be the enlarged or reduced image of the image displayed at the position corresponding to the partial region in the partial image corresponding to the opposite side of the partial image displayed on the main screen.

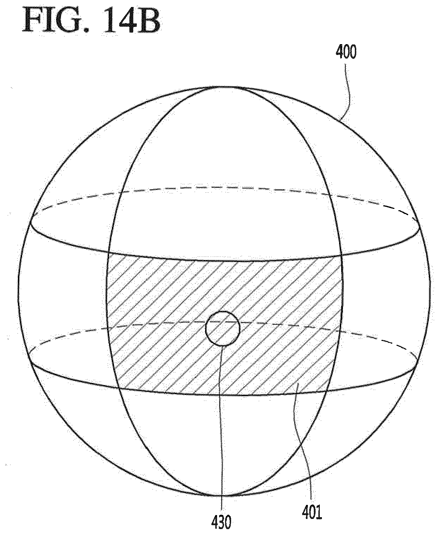

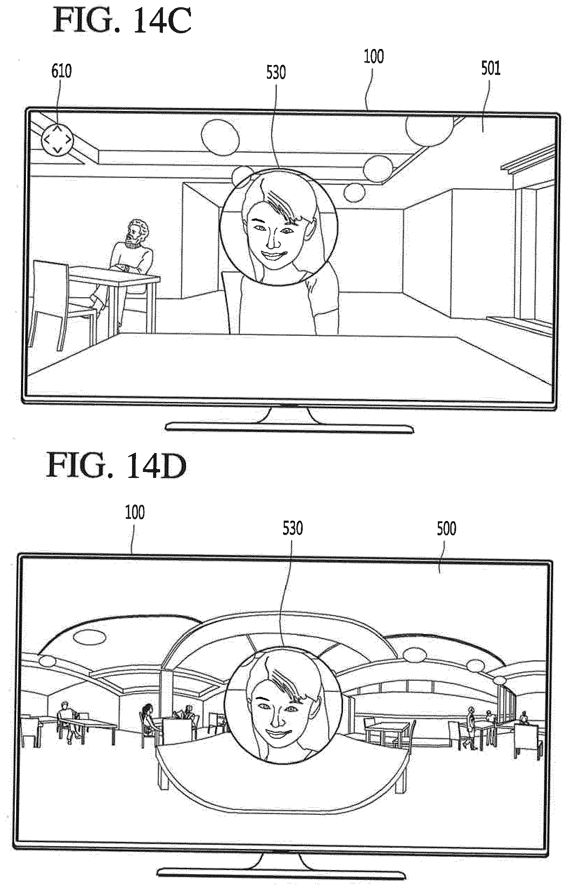

Embodiments related to the omnidirectional image displaying method illustrated in Fig. 13 will be described with reference to Figs. 14A to 16B.

Figs. 14A to 14D are exemplary views illustrating the omnidirectional image displaying method illustrated in Fig. 13.

Referring to Figs. 14A to 14C, the controller 170 may receive the zoom-in command for the partial region of the first partial image 501 displayed on the main screen. The partial region may correspond to the position of the pointer 205 and may have a predetermined size.

In response to the received zoom-in command, the controller 170 may acquire the enlarged image of the image of the partial region 430 within the region 401 corresponding to the first partial image 501 in the entire region 400 of the omnidirectional image. For example, the controller 170 may extract the image corresponding to the partial region 430 from the original data of the omnidirectional image stored in the memory 140, that is, the data of the omnidirectional image without distortion. The controller 170 may acquire the enlarged image by enlarging the extracted image. Therefore, even when distortion exists in the partial image of the omnidirectional image currently displayed on the main screen of the display unit 180, distortion may not exist in the enlarged image.

In Figs. 14A to 14C, the partial region 430 is illustrated as having a circular shape, but the shape of the partial region 430 may be variously implemented.

The controller 170 may display the enlarged image 530 of the partial region through the sub-screen on the first partial image 501 displayed through the main screen. In this case, the enlarged image 530 may be displayed at the position corresponding to the partial region.

Although not illustrated, the controller 170 may receive the movement request for moving the display position of the sub-screen from the remote control device 200. The movement request may be generated in response to the input of the direction button included in the remote control device 200 or the movement of the remote control device 200. The controller 170 may move the position of the sub-screen based on the received movement request and display the moved sub-screen. In this case, the enlarged image 530 displayed on the sub-screen may be changed to the enlarged image of the region corresponding to the position of the sub-screen.

Referring to Fig. 14D, according to an embodiment, the controller 170 may receive the zoom-in command or the zoom-out command for the first partial image 501 displayed on the main screen. For example, when the controller 170 receives the zoom-out command, the controller 170 may display the reduced image of the first partial image 501 displayed on the main screen while maintaining the enlarged image 530 displayed on the sub-screen. As illustrated in Fig. 14D, when the first partial image 501 is maximally reduced, the omnidirectional image 500 corresponding to the entire region may be displayed on the main screen.

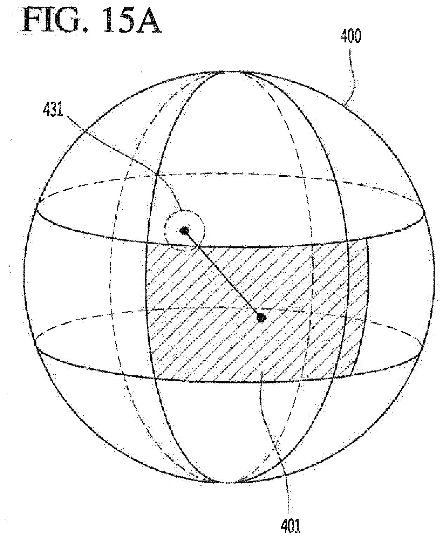

Figs. 15A to 15D are exemplary views illustrating the omnidirectional image displaying method illustrated in Fig. 13.

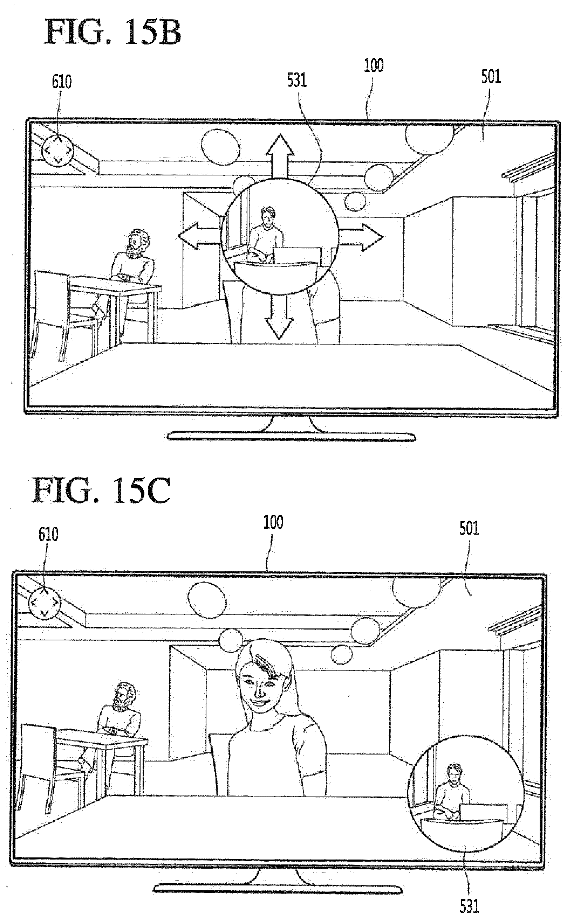

Referring to Figs. 15A and 15B, when the controller 170 receives the zoom-in command for the partial region of the main screen, the controller 170 may obtain the enlarged image of the image included in the region 431 corresponding to the opposite side of the first partial image 501 displayed on the main screen and corresponding to the partial region.

The controller 170 may display the acquired enlarged image 531 on the sub-screen. The enlarged image 531 may be displayed at the position corresponding to the partial region.

The controller 170 may receive the movement request for moving the position of the sub-screen, and may move the position of the sub-screen based on the received movement request. In this case, the enlarged image 531 displayed on the sub-screen may also be changed based on the moved position.

That is, the user can view the enlarged or reduced image of the part of the image of the opposite side of the partial image displayed on the main screen through the sub-screen.

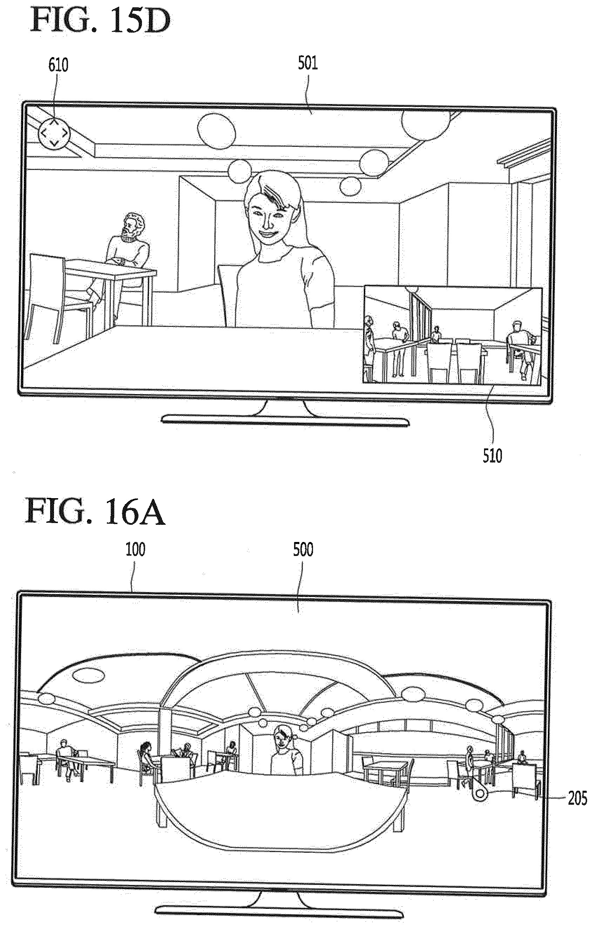

Referring to Figs. 15C and 15D, the controller 170 may fix the position of the sub-screen to a predetermined position of the display unit 180. That is, unlike the embodiment illustrated in Fig. 15B, the controller 170 may display the enlarged image 531 at a fixed position, not a position corresponding to the partial region. Therefore, the user can more smoothly view the first partial image 501 displayed on the main screen.

Additionally, the controller 170 may display the partial image corresponding to the opposite side of the first partial image 501 through the sub-screen. For example, based on the enlarged image 531 illustrated in Fig. 15C, the controller 170 may receive the display request for the partial image corresponding to the opposite side. Based on the received display request, the controller 170 may display the partial image 510 corresponding to the opposite side of the first partial image 501 on the sub-screen.

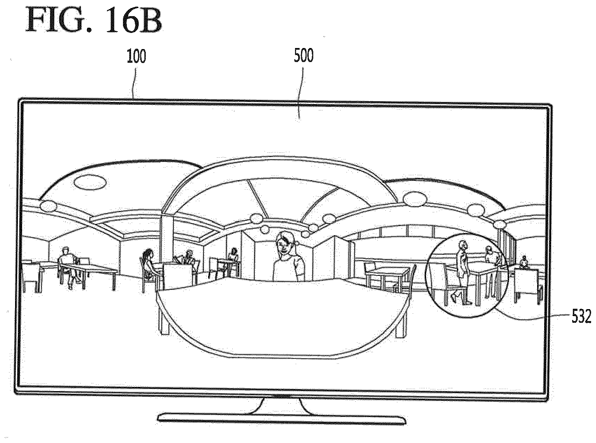

Figs. 16A and 16B are exemplary views illustrating the omnidirectional image displaying method illustrated in Fig. 13.

Referring to Figs. 16A and 16B, the controller 170 may display the omnidirectional image 500 corresponding to the entire region on the display unit 180. In this case, as described above, distortion may exist in the omnidirectional image 500 displayed on the display unit 180.

The controller 170 may receive the zoom command (for example, the zoom-in command) for the partial region of the displayed omnidirectional images 500. The controller 170 may display the enlarged image 532 on the sub-screen in response to the received zoom-in command. When the image included in the partial region is enlarged, the controller 170 may not acquire the enlarged image from the image displayed on the display unit 180. That is, the controller 170 may extract the image corresponding to the partial region from the original data of the omnidirectional image stored in the memory 140, and acquire the enlarged image from the extracted image. Therefore, distortion may not exist in the enlarged image 532 displayed on the sub-screen.

According to the embodiments illustrated in Figs. 13 to 16B, the user can more effectively view the omnidirectional image by using the zoom function for a desired partial region of the omnidirectional image. In particular, the user can use the zoom function to view the image of another region, which is not displayed on the main screen, through the sub-screen.

According to an embodiment, the above-described method can also be embodied as processor-readable codes on a program-recorded medium. Examples of the processor-readable medium include ROM, RAM, CD-ROM, a magnetic tape, a floppy disk, an optical data storage device, and the like. If desired, the processor-readable medium may be realized in the form of a carrier wave (for example, a transmission over the Internet).

The display device described above is not limited to the configurations and the methods of the embodiments described above, and all or some of the embodiments may be selectively combined so that various modifications can be made.

## Claims

1. A display device comprising:
a display unit configured to display a first partial image of an omnidirectional image on a main screen and display a second partial image on a sub-screen, the second partial image having the same viewpoint as the first partial image and including the first partial image;
a user input interface unit configured to receive a viewpoint movement command for the sub-screen; and
a controller configured to display a third partial image corresponding to a viewpoint moved from a viewpoint of the second partial image on the sub-screen, based on the received viewpoint movement command, and to perform control so that a viewpoint of the first partial image displayed on the main screen is maintained when the viewpoint is moved to the third partial image.

2. The display device according to claim 1, wherein the controller is configured to:
receive a selection request for selecting the third partial image displayed on the sub-screen according to the viewpoint movement command, and
change, in response to the received selection request, the first partial image displayed on the main screen to a fourth partial image having the same viewpoint as the third partial image and included in the third partial image, and display the fourth partial image.

3. The display device according to claim 1, further comprising a memory configured to store an original image of the omnidirectional image,
wherein the controller is configured to generate a distorted image for displaying an entire region of the omnidirectional image on the display unit,
the first partial image is acquired from the original image stored in the memory, and
the second partial image is acquired from the distorted image.

4. The display device according to claim 1, wherein the controller is configured to:
display the second partial image on the sub-screen in response to a zoom function execution request for the omnidirectional image; and
display, on the second partial image, a region guide indicating a region corresponding to the first partial image of the second partial image.

5. The display device according to claim 4, wherein the controller is configured to:
receive a zoom-in request or a zoom-out request for the fourth partial image displayed on the main screen;
display an enlarged image or a reduced image of the fourth partial image on the main screen in response to the received request; and
adjust a size of the region guide in correspondence to a region of the enlarged image or the reduced image.

6. The display device according to claim 4, wherein the second partial image corresponds to the omnidirectional image, and
the controller is configured to:
receive a request for moving the region guide and move and display a position of the region guide based on the received request; and
display a partial image corresponding to the moved position of the region guide on the main screen.

7. The display device according to claim 1, wherein the controller is configured to:
receive a zoom command for a partial region of the first partial image displayed on the main screen;
acquire an enlarged or reduced image of an image of the partial region in response to the received zoom command; and
display the sub-screen including the acquired image at a position corresponding to the partial region.

8. The display device according to claim 7, wherein the controller is configured to:
receive a movement request for moving a display position of the sub-screen;
move and display a position of the sub-screen based on the received movement request; and
display an enlarged or reduced image of a region corresponding to the moved position on the sub-screen.

9. The display device according to claim 7, wherein the controller is configured to:
acquire an enlarged or reduced image for an image of a region corresponding to the partial region in an image of an opposite side of the first partial image of the omnidirectional image in response to the received zoom command; and
display the sub-screen including the acquired image at a position corresponding to the partial region.

10. The display device according to claim 7, wherein the position of the partial region corresponds to a display position of a pointer corresponding to a movement of a remote control device.

11. A display device comprising:
a memory configured to store an original image of an omnidirectional image;
a display unit configured to display a first partial image of the omnidirectional image on a main screen and display a second partial image on a sub-screen, the second partial image having the same viewpoint as the first partial image and including the first partial image; and
a controller configured to generate a distorted image for displaying an entire region of the omnidirectional image on one screen through the display unit,
wherein the first partial image is acquired from the original image, and the second partial image is acquired from the distorted image.

12. The display device according to claim 11, wherein the controller is configured to:
receive a viewpoint movement command for the sub-screen; and
display a third partial image corresponding to a viewpoint moved from a viewpoint of the second partial image through the sub-screen, based on the received viewpoint movement command.

13. The display device according to claim 12, wherein the controller is configured to:
receive a selection request for selecting the third partial image;
in response to the received selection request, change the first partial image displayed on the main screen to a fourth partial image having the same viewpoint as that of the third partial image and included in the third partial image, and display the fourth partial image; and
wherein the third partial image is acquired from the distorted image, and the fourth partial image is acquired from the original image.

14. The display device according to claim 11, wherein the controller is configured to:
display the second partial image on the sub-screen in response to a zoom function execution request for the omnidirectional image; and
display, on the second partial image, a region guide indicating a region corresponding to the first partial image of the second partial image.

15. The display device according to claim 14, wherein the controller is configured to:
receive a zoom-in request or a zoom-out request for the first partial image displayed on the main screen;
display an enlarged or reduced image of the first partial image on the main screen in response to the received request; and
adjust a size of the region guide in correspondence to a region of the enlarged image or the reduced image.

16. The display device according to claim 14, wherein the second partial image corresponds to the distorted image, and
the controller is configured to:
receive a request for moving the region guide;
move and display a position of the region guide in response to the received request;
acquire a partial image corresponding to the moved position of the region guide from the original image; and
display the acquired partial image on the main screen.

17. The display device according to claim 14, wherein the controller is configured to:
display an enlargement/reduction bar indicating a degree of enlargement or reduction of the first partial image; and
receive a zoom-in request or a zoom-out request for the first partial image through the enlargement/reduction bar.

18. The display device according to claim 11, wherein the controller is configured to:
receive a zoom command for a partial region of the first partial image displayed on the main screen;
acquire an enlarged or reduced image of the partial region in response to the received zoom command; and
display the sub-screen including the acquired image at a position corresponding to the partial region.

19. The display device according to claim 18, wherein the controller is configured to:
receive a movement request for moving a display position of the sub screen;
move and display a position of the sub-screen based on the received movement request; and
display an enlarged or reduced image of a region corresponding to the moved position on the sub-screen.

20. The display device according to claim 18, wherein the position of the partial region corresponds to a display position of a pointer corresponding to a movement of a remote control device.
